# DEMANDE DE BREVET EUROPEEN

(11) **EP 0 708 166 A1**
(43) Date de publication de la demande: **24.04.1996**
(21) Numéro de dépôt: 95402224.0
(22) Date de dépôt: 05.10.1995
(51) Int. Cl.: C10B 53/00

(54) **Procédé et dispositif de neutralisation de gaz acides et d'élimination de déchets**

(30) Priorité: 06.10.1994 FR 9412049
(71) Demandeur: INSTITUT FRANCAIS DU PETROLE, F-92500 Rueil-Malmaison (FR)
(72) Inventeur: Martin, Gérard, F-92500 Rueil Malmaison (FR); Marty, Eric, F-92500 Rueil Malmaison (FR)

(57) **Abrégé**

On neutralise les gaz acides issus de la thermolyse de déchets et on élimine un produit de synthèse comportant du carbonate de calcium et/ou un de ses dérivés en mettant en oeuvre une étape au cours de laquelle on mélange les déchets et le produit de synthèse et on soumet ce mélange à une température comprise entre 200 et 1500°C.

## Description

La présente invention concerne le traitement de produits de synthèse et la neutralisation de gaz acides résultant d'un traitement thermique de déchets.

Elle trouve, notamment son application pour éliminer des produits de synthèse tels que des déchets provenant de matériaux associant de par leur composition chimique une partie organique et une partie minérale, cette dernière comprenant du carbonate de calcium, et simultanément neutraliser les gaz acides issus de la décomposition de déchets sous l'action de la chaleur, par exemple lors d'une thermolyse.

Elle trouve avantageusement son application pour l'élimination de déchets de matériaux ayant une partie organique comportant un ou plusieurs polymères de synthèse.

L'invention trouve des applications notamment dans les dispositifs permettant de neutraliser les gaz acides, tels le chlorure d'hydrogène, le fluorure d'hydrogène, le sulfure d'hydrogène et/ou les oxydes de soufre, mettant en jeu une opération thermique.

Le traitement thermique des déchets et en particulier leur thermolyse est une technique qui présente des avantages économiques importants. Elle permet, notamment, de traiter tout type de déchets non dangereux, de préférence solides et hétérogènes. Ces déchets sont en premier lieu des ordures ménagères, mais également des déchets industriels, des résidus de broyage d'automobiles, des pneus usagés, des déchets de plastique, des boues industrielles ou provenant de station d'épuration....

Ces déchets contiennent des composés chimiques riches en chlore, fluor et soufre, qui lors de leur décomposition sous l'action de la chaleur forment majoritairement des gaz acides. En particulier, les déchets riches en composés chimiques synthétiques tels que les matières plastiques (PVC, par exemple), les élastomères sont responsables de l'émission des gaz acides qui sont considérés comme des gaz polluants très corrosifs. Ces gaz peuvent être à l'origine d'importants problèmes de corrosion, notamment dans les parties exposées des installations de traitement thermique des déchets.

Leur rejet dans l'atmosphère peut, de plus, avoir des conséquences néfastes sur l'environnement, par exemple sur la faune et la flore, telle la déforestation.

Parmi les déchets de toute sorte qui s'accumulent actuellement, les déchets de matériaux associant une partie organique et une partie minérale riche en carbonate de calcium ou ses dérivées ont une place prépondérante. En effet, le carbonate de calcium constitue la plus grande classe de charge minérale utilisée aujourd'hui industriellement pour modifier les propriétés des matériaux. L'industrie de l'automobile utilise par exemple des matériaux constitués d'une résine polyester, de fibre de verre, et de carbonate de calcium pour réaliser certaines pièces.

De nombreuses pièces à haute technicité utilisées dans des industries variées utilisent aussi des polymères de synthèse, tels que des thermoplastiques, des thermodurcissables ou des élastomères, associés à une ou plusieurs charges minérales dont au moins une est riche en carbonate de calcium.

L'importance croissante de ces matériaux pose le problème du traitement des déchets issus de ces matériaux, qu'ils s'agissent de matériaux en fin de vie ou de rebuts ou encore de sous produits issus de la fabrication de ces matériaux. De plus, la législation en ce qui concerne les valeurs limites d'émission de composés gazeux nocifs dans l'atmosphère devient de plus en plus contraignante et tend à évoluer vers des valeurs plus contraignantes, déjà en vigueur dans certains pays de la CEE.

Il s'avère donc nécessaire de développer des procédés et des dispositifs de traitement de tels matériaux et d'élimination des gaz nocifs, de plus en plus performant et de moins en moins coûteux.

Divers dispositifs et méthodes de traitement sont décrits dans l'art antérieur qui permettent d'éliminer ces gaz acides en mettant en oeuvre des absorbants naturels ou synthétiques. Par exemple, les demandes de brevet FR 90/13844 et FR 91/08718 déposées par le demandeur décrivent des dispositifs de thermolyse qui traitent les gaz acides en réalisant une dégradation thermique des déchets en absence d'oxygène à une température par exemple comprise entre 200 et 700°C, ladite dégradation thermique conduisant à la formation d'un gaz combustible et d'un solide riche en carbone. Selon le mode de réalisation du procédé, tout ou partie des gaz combustibles ainsi formés est utilisé pour chauffer le four, alors que le résidu solide subit un traitement d'épuration visant à éliminer certains polluants et à améliorer sa qualité en diminuant son taux de cendres.

Les procédés de traitement mis en oeuvre pour neutraliser les gaz acides sont séparés en deux grandes catégories, les procédés dits secs ou semi-secs et les procédés dits humides.

Les procédés et dispositifs décrits dans l'art antérieur présentent néanmoins des inconvénients notables, par exemple, l'utilisation de produits naturels en tant qu'absorbants des gaz acides contribue à l'appauvrissement des gisements formant la source de ces absorbants. De plus seule l'opération de neutralisation des gaz acides est réalisée au cours du procédé.

Il a été découvert et, c'est l'un des buts de la présente invention, qu'il est possible en choisissant de manière judicieuse, la nature des produits de synthèse utilisés comme absorbants et les conditions opératoires dans lesquelles s'effectue un traitement thermique de déchets, de neutraliser les gaz acides issus du traitement thermique des déchets et d'éliminer les produits de synthèse restant.

Ainsi, l'utilisation de déchets de matériaux associant une partie organique et une partie minérale riche en carbonate de calcium dans un procédé de thermolyse permet de réaliser simultanément les deux opérations suivantes : la neutralisation des gaz acides et l'élimination des déchets de matériaux.

De manière à clarifier la présente description, le mot "déchet" concerne les déchets à traiter susceptibles de former des gaz nocifs, tels que des gaz acides lors d'un procédé de thermolyse, alors que le terme "produit de synthèse" désigne les déchets de matériaux comportant au moins une partie organique et une partie minérale riche en carbonate de calcium.

La présente invention concerne un procédé permettant d'éliminer un produit de synthèse comportant au moins du carbonate de calcium et/ou un de ses dérivés et de neutraliser des gaz acides issus de la thermolyse de déchets à traiter. Il est caractérisé en ce qu'il comporte au moins une étape au cours de laquelle, on soumet le mélange constitué de déchets à traiter et d'au moins un produit de synthèse comportant une partie organique et une partie minérale riche en carbonate de calcium à une étape de traitement thermique à une température comprise entre 200 et 1500°C, au cours de laquelle les gaz acides générés par les déchets à traiter sont neutralisés par le carbonate de calcium et la partie organique du produit de synthèse est détruite au moins en partie sous l'action de la chaleur.

La température de réaction est, de préférence, comprise entre 500 et 700°C.

On utilise par exemple des produits de synthèse tels que des déchets de matériaux dont la partie organique est constituée d'un ou plusieurs polymères de synthèse.

Le produit de synthèse peut comporter une partie organique constituée d'une résine polyester et des fibres de verre, en combinaison avec la partie minérale riche en carbonate de calcium.

On peut aussi utiliser des produits de synthèse provenant de déchets de matériaux issus de l'industrie automobile et/ou celle des équipementiers automobiles.

On utilise un matériau composite provenant de la fabrication de "SMC-Sheet Molding Compound", comportant de la résine de polyester, des fibres de verre et du carbonate de calcium.

La présente invention concerne aussi un dispositif pour neutraliser des gaz acides issus de déchets à traiter et détruire ou éliminer au moins un déchet de matériau comprenant une partie minérale riche en carbonate de calcium et/ou un de ses dérivés et une partie organique. Il est caractérisé en ce qu'il comporte en combinaison une enceinte de traitement thermique, et des moyens de mélange des déchets à traiter avec au moins un déchet de matériau.

Le dispositif peut comporter des moyens de contrôle et de régulation des conditions opératoires du traitement thermique.

Le moyen de mélange est, par exemple, un dispositif à double vis sans fin, positionné juste avant l'enceinte de traitement thermique et pénétrant au moins en partie dans ladite enceinte .

Le moyen de mélange peut aussi être un cylindre tournant équipé d'aubes.

Les avantages offerts par la présente invention sont notables du fait de sa simplicité permettant d'utiliser un produit de synthèse comme agent de neutralisation de gaz acides et au cours de la même opération d'éliminer ce produit .

La simultanéité de ces deux opérations permettent de diminuer les coûts habituels de traitement des déchets.

L'utilisation de produits de synthèse, tels des déchets de matériaux contenant un ou plusieurs polymères de synthèse et au moins une charge minérale en carbonate de calcium en substitution d'absorbants commerciaux comme la chaux ou le calcaire, permet de plus d'augmenter la basicité des déchets à traiter par thermolyse ou lors d'une opération thermique et d'améliorer les rendements de neutralisation des gaz acides.

De plus, de tels déchets de matériaux issus d'industries variées présentent des coûts nuls voire négatifs, et leur utilisation supprime tout problème relatif à leur élimination, leur stockage ou leur traitement effectuée dans la plupart des cas par des opérations souvent complexes et onéreuses.

Une telle utilisation présente donc des avantages techniques et économiques non négligeable par rapport à l'utilisation d'absorbants commerciaux.

Les caractéristiques et avantages de l'invention apparaîtront mieux à la lecture de la description donnée ci-après d'exemples non limitatifs de réalisation, en se référant aux dessins annexés où :
- la figure 1 montre un dispositif permettant l'introduction des absorbants avant la formation des gaz acides,
- la figure 2 est une amélioration du dispositif de la figure 1 incluant un moyen tournant de brassage, et
- la figure 3 montre un dispositif comprenant un dispositif de mélange à vis.

En choisissant de manière judicieuse la nature des produits de synthèse utilisés habituellement comme absorbant des gaz acides, il est possible de neutraliser les gaz acides à l'aide de la partie calcique du produit de synthèse et d'éliminer le reste du produit de synthèse, à l'aide d'une opération thermique.

Le procédé, afin de mieux cerner l'invention sera décrit pour son application à la neutralisation de gaz acides issus de la thermolyse de déchets comportant des composés susceptibles de libérer des gaz acides sous l'action de la chaleur, à l'aide d'un produit de synthèse ou déchet de matériau provenant de l'industrie automobile et fréquemment utilisé dans cette industrie, par exemple le matériau appelé par l'homme de l'art "SMC" abréviation de "Sheet Molding Compound".

Un tel matériau est constitué d'au moins un polymère de synthèse dont les propriétés ont été modifiées par des charges minérales, et comporte plus précisément une résine polyester, des fibres de verre et du carbonate de calcium.

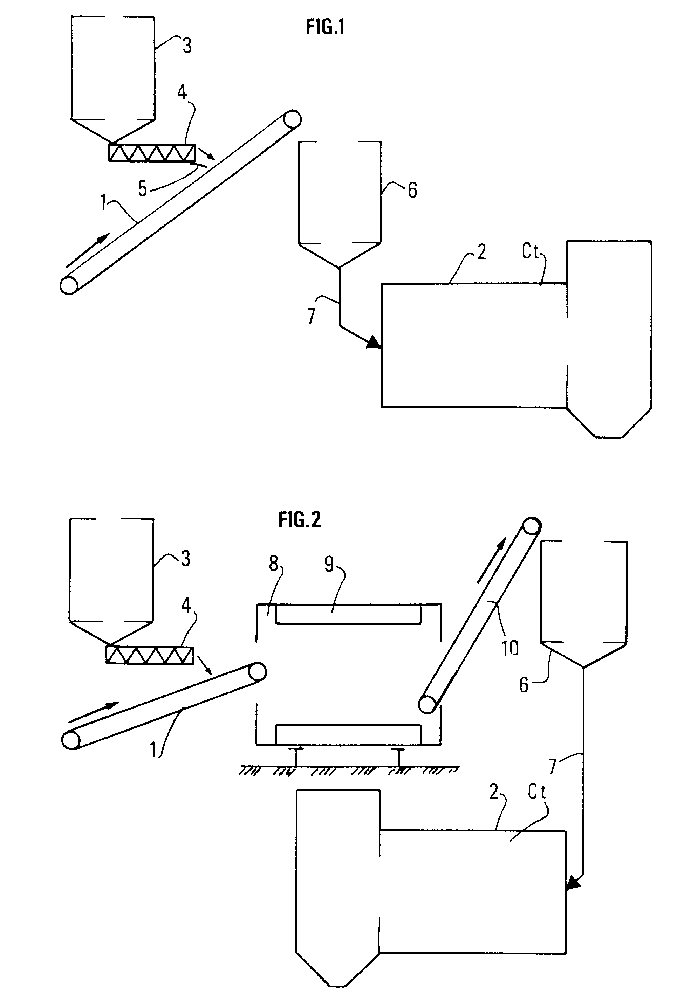

Suivant la Figure 1, le dispositif comporte une ligne d'arrivée 1 des déchets à traiter dans une capacité de stockage 6, adaptée pour permettre leur mélange avec un déchet de matériau provenant d'une trémie 3 dont la distribution vers la ligne 1 est contrôlée par un moyen 4 tel qu'un doseur à vis ou une vanne rotative ou tout autre dispositif équivalent connu de l'homme de métier. La ligne d'arrivée 1 peut être un tapis convoyeur, un élévateur à godets ou tout autre dispositif équivalent. Le matériau est, par exemple dispersé grâce à un moyen approprié 5, vers les déchets à traiter et mélangé à ces derniers du fait du mouvement sur le tapis. Le mélange composé du déchet de matériau et du déchet à traiter introduit dans la capacité de stockage 6 est envoyé dans un four à thermolyse 2 à l'aide d'une ligne 7.

Le four à thermolyse est équipé de capteurs de température Ct pour contrôler, de préférence en permanence, la température régnant dans le four à thermolyse et réguler le déroulement des opérations de neutralisation des gaz acides et de destruction ou élimination des déchets de matériau.

Ces capteurs, de façon connue de l'homme de métier, peuvent être reliés à un micro-contrôleur adapté à recevoir des signaux, à les traiter et à générer si nécessaire des signaux à des dispositifs de régulation de température du four et/ ou de dosage des déchets de matériau à mélanger aux déchets à traiter. On peut de cette manière piloter les conditions opératoires de la réaction thermique et la quantité des éléments, à savoir les déchets de matériau et les déchets à traiter, participant à cette réaction.

La réaction de thermolyse s'effectue sur le mélange déchet de matériau/déchet à traiter, ce qui permet d'obtenir une neutralisation des gaz acides générés par la décomposition thermique des déchets à traiter et simultanément, la destruction ou l'élimination du déchet de matériau composite utilisé pour ses propriétés d'absorbant. Les gaz acides polluants sont, par exemple, piégés par la partie minérale riche en carbonate de calcium du déchet de matériau et restent dans le four de thermolyse, alors que la partie organique du déchet de matériau se trouve en partie ou en totalité détruite par l'action de la chaleur.

La température régnant dans le four à thermolyse est, par exemple comprise entre 200 et 1500°C et, de préférence, entre 400 et 700 °C.

Les produits de synthèse utilisés pour neutraliser les gaz acides sont en général des déchets de matériaux à éliminer du fait de leur caractère polluant. Ils comportent au moins une partie minérale riche en carbonate de calcium et/ou un de ses dérivés, et une partie organique. Ils peuvent aussi comporter d'autres éléments, de préférence en faible quantité, qui présentent la particularité d'être détruits, par exemple sous l'action de la chaleur dans des conditions sensiblement identiques à celles requises pour la partie organique lorsqu'ils présentent des propriétés nocives.

La proportion de la partie minérale peut être comprise entre 10 et 50%.

On utilise par exemple des produits de synthèse tels que des déchets de matériaux dont la partie organique est constituée d'un ou plusieurs polymères de synthèse.

Le produit de synthèse peut comporter une partie organique constituée d'une résine polyester et des fibres de verre, en combinaison avec la partie minérale riche en carbonate de calcium.

On peut aussi utiliser des produits de synthèse provenant de déchets de matériaux issus de l'industrie automobile et/ou celle des équipementiers automobiles.

Comme il a été mentionné précédemment, il est possible d'utiliser des matériaux composites issus de la fabrication de "SMC Sheet Molding Compound" comportant de la résine polyester, des fibres de verre et du carbonate de calcium

Le déchet de matériau peut être utilisé seul ou mélangé à d'autres déchets de matériaux présentant des caractéristiques sensiblement identiques, ces déchets étant de préférence compatibles entre eux pour que leur mélange ne détruise pas les caractéristiques nécessaires à la neutralisation des gaz acides et à la destruction ou élimination de la partie complémentaire non utilisée pour neutraliser ces gaz acides, par exemple la partie organique.

Il peut se présenter sous différentes formes, par exemple sous forme de pâte, de liquide ou de solides de préférence de faibles tailles, de manière à permettre le mélange du produit aux déchets à traiter.

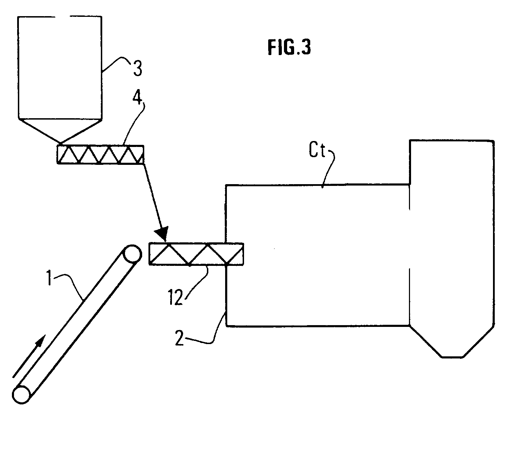

Les figures 2 et 3 permettent d'augmenter le rendement du dispositif de la figure 1, notamment en améliorant le mélange formé du matériau à détruire et des déchets à traiter, et en optimisant éventuellement le rapport déchet à traiter/déchet de matériaux à éliminer.

Sur la figure 2, le mélange déchet de matériau/déchets à traiter en mouvement sur le tapis 1 est introduit dans un dispositif 8 adapté à assurer un brassage efficace du mélange déchet de matériau/déchets à traiter. Ce dispositif 8 est, par exemple, un cylindre tournant équipé d'aubes 9 positionnées selon les génératrices du cylindre. On améliore de cette façon le mélange déchet de matériau/déchets à traiter et on facilite sa progression dans le cylindre tournant.

L'axe du cylindre peut être légèrement incliné par rapport à un plan horizontal pour faciliter le mouvement des déchets à traiter et des déchets de matériau à éliminer.

La rotation du cylindre et des aubes est, par exemple, assurée par un moteur non représenté sur la figure ou tout autre moyen approprié.

Le mélange optimisé est ensuite envoyé par une conduite 10 dans la capacité de stockage 6 avant d'être introduit dans le four de thermolyse 2 par la conduite 7 où les gaz acides sont neutralisés en partie ou en totalité par la charge minérale du déchet de matériau, plus particulièrement par le carbonate de calcium et la partie organique du déchet de matériau est détruite sous l'action de la chaleur régnant au sein du four.

Une autre manière de procéder schématisée à la figure 3 consiste à utiliser un dispositif de mélange par vis 12 qui optimise le mélange des déchets à traiter et du matériau composite, le dispositif étant positionné, de préférence, directement avant le four de thermolyse 2 et pouvant jouer le rôle de mélangeur et de moyen d'introduction du mélange du fait qu'il pénètre au moins en partie dans le four. Cet dispositif de mélange est avantageusement constitué d'une ou plusieurs vis jumelles, de préférence des vis sans fin.
Le mélange des déchets à traiter avec les déchets de matériaux à éliminer issu du mélangeur 12 pénètrent dans le four à thermolyse 2 où les gaz acides sont neutralisés par le carbonate de calcium ou partie calcique de la charge minérale du déchet de matériau alors que la partie organique de ce dernier est détruite sous l'effet de la température.

Le dispositif 12 permet de plus de contrôler la quantité du produit de synthèse introduite dans le four à thermolyse.

Le principe du procédé selon l'invention sera mieux compris en relation avec l'exemple donné ci-après à titre indicatif et nullement limitatif. Dans cet exemple les pourcentages sont exprimés en poids.

Le produit de synthèse utilisé pour réaliser le procédé provient de l'industrie automobile. Il est composé de 30 % de fibres de verre, de 30 % de résine organique polyester et de 40 % de carbonate de calcium, ces trois parties étant intimement mélangées. Les déchets de ce produit contiennent donc 30 % de matières organiques qu'il convient d'éliminer, et 40 % de matières riches en carbonate de calcium qui sont utilisées pour neutraliser les gaz acides produits par le traitement thermique de déchets.

Ce produit de synthèse est utilisé par exemple pour neutraliser l'acide chlorhydrique produit par la thermolyse de déchets ménagers.

Les deux opérations précitées, à savoir, la neutralisation de l'acide chlorhydrique et l'élimination de la partie organique du produit de synthèse sont réalisées simultanément par exemple de la façon décrite ci-après.

On mélange 3,5 kg du produit de synthèse issu de l'industrie automobile avec 100 kg de déchets ménagers avec l'un des dispositifs décrits sur les figures 1 à 3. Une fois réalisé, le mélange des deux produits est stocké dans la capacité 6, puis introduit dans le four de thermolyse 2 à l'aide de la ligne 7.

La régulation de température permet avantageusement de maintenir la température dans le four 2 à 550°C. Dans ces conditions de température, la partie organique des déchets ménagers se décompose et libère des gaz acides tel l'acide chlorhydrique qui réagissent avec le carbonate de calcium, ou l'un de ses dérivés, ce dernier étant libéré par la décomposition thermique de la partie organique du produit de synthèse et sont donc fixés dans les résidus solides du traitement thermique.

Le rendement de captation des gaz acides se trouve ainsi amélioré de façon importante, et passe de 90 % avant introduction du produit de synthèse à 99,5 % en présence du produit de synthèse.

## Revendications

1. Procédé pour éliminer simultanément un produit de synthèse comportant au moins du carbonate de calcium et/ou un de ses dérivés et neutraliser des gaz acides issus de la thermolyse de déchets à traiter caractérisé en ce qu'il comporte au moins une étape au cours de laquelle, on soumet le mélange constitué de déchets à traiter et d'au moins un produit de synthèse comportant une partie organique et une partie minérale riche en carbonate de calcium à une étape de traitement thermique à une température suffisante comprise entre 200 et 1500°C, au cours de laquelle les gaz acides générés par les déchets à traiter sont neutralisés par le carbonate de calcium et simultanément la partie organique du produit de synthèse est détruite au moins en partie sous l'action de la chaleur.

2. Procédé selon la revendication 1 caractérisé en ce que l'on utilise des produits de synthèse tels que des déchets de matériaux dont la partie organique est constituée d'un ou plusieurs polymères de synthèse.

3. Procédé selon l'une des revendications 1 et 2, caractérisé en ce que l'on utilise des produits de synthèse provenant de déchets de matériaux issus de l'industrie automobile et/ou celle des équipementiers automobiles.

4. Procédé selon l'une des revendications 1 et 2, caractérisé en ce que l'on utilise un produit de synthèse comportant une partie organique constituée d'une résine polyester et des fibres de verre, en combinaison avec la partie minérale riche en carbonate de calcium.

5. Procédé selon la revendication 1, caractérisé en ce que l'on opère à une température comprise entre 400 et 700°C.

6. Application du procédé selon l'une des revendications précédentes pour éliminer des matériaux composites issus de la fabrication de "SMC Sheet Molding Compound" comportant de la résine polyester, des fibres de verre et du carbonate de calcium.

7. Dispositif pour neutraliser simultanément des gaz acides issus de la thermolyse de déchets à traiter et détruire ou éliminer au moins un déchet de matériau comprenant une partie minérale riche en carbonate de calcium et/ou un de ses dérivés et une partie organique caractérisé en ce qu'il comporte en combinaison une enceinte de traitement thermique (2), des moyens de mélange (1; 8, 9; 12) des déchets à traiter avec au moins un déchet de matériau.

8. Dispositif selon la revendication 7, caractérisé en ce qu'il comporte des moyens de contrôle et de régulation (Ct) des conditions opératoires du traitement thermique.

9. Dispositif selon les revendications 7 et 8, caractérisé en ce que le dispositif de mélange est un dispositif à double vis sans fin positionné juste avant l'enceinte de traitement thermique et pénétrant au moins en partie dans ladite enceinte.

10. Dispositif selon les revendications 7 et 8, caractérisé en ce qu'il comporte un dispositif de mélange tournant tel qu'un cylindre tournant (8) équipé d'aubes (9).
